# EUROPÄISCHE PATENTSCHRIFT

(11) **EP 0 569 988 B1**
(45) Veröffentlichungstag und Bekanntmachung des Hinweises auf die Patenterteilung: **19.08.1998**
(21) Anmeldenummer: 93107826.5
(22) Anmeldetag: 13.05.1993
(51) Int. Cl.: B62B 3/06

(54) **Transportkarre für unterfahrbare Gegenstände**
Transport cart for pallet-type objects
Chariot de transport pour objets de type palette

(30) Priorität: 14.05.1992 DE 9206563 U; 30.05.1992 DE 4217944; 20.08.1992 DE 9211190 U
(43) Veröffentlichungstag der Anmeldung: 18.11.1993
(73) Patentinhaber: EXPRESSO-DEUTSCHLAND TRANSPORTGERÄTE GmbH, 34123 Kassel (DE)
(72) Erfinder: Hovmand, Hans-Christian, DK-4180 Sorö (DK)
(74) Vertreter: Schön, Theodor, Patent- und Zivilingenieur

(56) Entgegenhaltungen:
- DE-A- 2 427 022
- DE-A- 3 147 278
- FR-A- 2 439 742
- GB-A- 956 065
- GB-A- 2 221 444
- US-A- 2 087 861
- US-A- 2 437 953
- US-A- 2 560 146
- US-A- 2 669 421

## Beschreibung

Die Erfindung bezieht sich auf eine Transportkarre für unterfahrbare Gegenstände, insbesondere Paletten und dergl., bestehend aus einem über wenigstens ein vorderes und zwei hintere Räder gegen den Boden abgestützten, einen aufragenden Tragbock umfassenden Chassis und einem dieses übergreifenden sowie diesem gegenüber in paralleler horizontaler Ausrichtung anhebbaren Tragteil und einer Einrichtung zum Anheben des Tragteiles gegenüber dem Chassis sowie einem aufragend angeordneten Schiebebügel.

Eine Transportkarre dieser Bauart ist im Wesentlichen aus der US-PS 2 669 421 bekannt. Im Bereich der Lagerhaltung, wie auch in bestimmten Ladengeschäften sind in stänig wechselnder Reihenfolge und insbesondere unmittbar aufeinanderfolgend Stückgüter oder Paletten zu transportieren oder umzusetzen, wozu üblicherweise Transportkarren unterschiedlichster Bauart eingesetzt werden müssen, da die bekannten Bauarten von Hub-bzw. Transportkarren zum Transport von Paletten, etwa solche nach DE-OS 24 27 022, gewöhnlich mit einer vermittels einer, manchmal auch mit Muskelkraft, antreibbaren Hubeinrichtung höhenverstellbaren Lasttraggabel ausgestattet sind, welche sich zum Transport kleinerer Stückgüter nicht eignet. Im übrigen zeichnen sich die bekannten Bauarten von zum Aufnehmen und Transportieren von Paletten geeigneten Transportkarren zum einen durch eine aufwendige hydraulische Gestaltung der Hubeinrichtung (US-PS 3612564) oder aber durch eine Verwendung des Schubbügels als Antriebsglied für eine mechanische Hubeinrichtung (US-PS 3 290 051) aus. Dabei ist im ersten Falle ein erheblicher Bauaufwand für die Hubeinrichtung bzw. deren Antrieb erforderlich, welcher die Transportkarre insgesamt beträchtlich verteuert, und bedingt im anderen Falle die Verwendung des Schubbügels als Antriebsmittel für die Hubeinrichtung einen erheblichen Bedarf an Manövrierraum beim Einsatz der Transportkarre.
Weitere bekannte Bauarten von ähnlichen Transportkarren, beispielsweise nach der US-PS 2 560 146, 2 087 861, 2 437 953 oder GB-PS 956 065 zeichnen sich in besonderer Weise dadurch aus, daß bei mehr oder minder komplizierter Ausbildung der Hubeinrichtung die Tragfläche im Verlauf der vertikalen Hubbewegung von einer horizontalen Schiebebewegung überlagert ist, was für den Einsatz der Transportkarre unter räumlich sehr beengten Verhältnissen äußerst ungünstig ist und zudem kein sicheres, lagengenaues Abstellen von Lasten ermöglicht, jedenfalls dann nicht wenn die Transportkarre durch ungeschultes weniger geübtes Personal benutzt werden muß.
Die aus der eingangs gennaten US-PS 2 669 421 bekannt gewordene Bauart einer solchen Transportkarre zeichnet sich zwar dadurch aus, daß eine das Chassis übergreifende Tragfläche vermittels einer Hubein-richtung und eines am Chassis aufragend angeordneten Tragbockes in paralleler horizontaler Ausrichtung vertikal nach oben anhebbar ist, zeichnet sich aber zugleich auch durch eine komplizierte Bauweise und damit durch einen erheblichen Herstellungsaufwand aus und bietet darüberhinaus keine Möglichkeit die gegeneinander beweglichen Teile so abzudecken, daß jedwede Unfallgefahr für das Bedienpersonal ausgeschlossen ist.
Darüberhinaus ist diese Transportkarre hinterendig über lediglich eine Rolle bzw. ein Rad gegen den Boden abgestützt, was das Manövrieren mit der beladenen Karre äußerst erschwert, ganz abgesehen davon, daß auch bei dieser Bauart für die Betätigung der Hubeinrichtung die Verwendung des Schubbügels als Antriebsmittel vorgesehen ist, woraus eine zusätzliche verringerung der Manövrierbarkeit unter beengten räumlichen Verhältnissen resultiert.

Der Erfindung liegt daher die Aufgabe zugrunde eine Transportkarre gemäß dem Oberbegriff des Anspruches 1 dahingehend zu verbessern, daß sie bei geringem Herstellungsaufwand und guter Manövrierbarkeit sowie großer Tragfähigkeit und ausreichender Hubhöhe selbst bei mangelnder Geschicklichkeit oder Aufmerksamkeit jedwede Unfall-oder Verletzungsgefahr für das Bedienpersonal ausschließt und sowohl zum sicheren Transport von gewöhnlichen Stückgut als insbesondere auch zum sicheren Versetzen von Paletten jeweils auf engstem Raum geeignet ist.

Diese Aufgabe wird erfindungsgemäß im Wesentlichen dadurch gelöst, das Chassis eine aus wenigstens einem Längs- und einem Querbalken gebildete im Wesentlichen T-förmige Grundrißform besitzt, wobei der Querbalken dem Längsbalken gegenüber derart höhenversetzt angeordnet ist, daß er einen größeren Abstand zum Boden aufweist und daß das als das Chassis übergreifende horizontal ausgerichtete Tragfläche ausgebildete Tragteil an seine Tragfläche anschließend mit einer nach oben gerichteten, eine hau-benartige Abdeckung des Tragbockes und der durch ein vermittels einer Antriebseinrichtung verschwenkbares Schwenkhebelparallelogramm gebildeten Einrichtung zur Höhenverstellung des Tragteiles in paralleler horizontaler Ausrichtung gegenüber dem Chassis bildenden und mittels eines Deckels zu einem geschlossenen Kasten ergänzten Endabwinkelung versehen ist.

Die erfindungsgemäße T-förmige Grundrißform des Chassis gewährleistet dabei eine auch bei beladener Tragfläche des Tragteiles absolut standsichere Gestaltung des Fahrwerkes bzw. der Transportkarre insgesamt. Zugleich gestattet es die Ausbildung des Tragteiles als Tragfläche die Transportkarre ohne jegliches Zusatzteil und insbesondere ohne Umrüstung sowohl zum Transport üblichen Stückgutes als auch zum Versetzen von Paletten einzusetzen, wobei die Ausbildung einer an die Tragfläche angeschlossenen, nach oben gerichteten, eine haubenartige Abdeckung des Tragbockes und der Einrichtung zum Anheben des Tragteiles gegenüber dem Chassis bildenden und mittels eines Deckels zu einem geschlossenen Kasten ergänzten Endabwinkelung darüberhinaus noch den Vorteil glattflächiger und damit insbesondere Unfall- oder Verletzungsgefahren für das Bedienpersonal ausschließender Umfangskonturen mit sich bringt.

In einer bevorzugten Ausgestaltungsform der Erfindung ist vorgesehen, daß das Chassis eine aus zwei miteinander verbundenen Hohlträgern und an diesen gelagerten Laufrollen sowie der Einrichtung zum Anheben des Tragteiles gegenüber dem Chassis bestehende, eine erste im wesentlichen eine T-förmige Grundrißform aufweisende, vormontierte Baueinheit und ein an seine Tragfläche anschließend eine nach oben gerichtete, aufragende Endabwinkelung aufweisendes Tragteil eine zweite vorgefertigte bzw. vorfertigbare Einheit bilden, und daß beide Baueinheiten vermittels zweier Schwenkhebelpaare miteinander verbunden sind.
Dies eröffnet die Möglichkeit die Holme des Schiebebügels an die nach oben gerichtete Endabwinkelung des Tragteiles anzuschliessen, derart, daß das Tragteil und der Schiebebügel eine vormontierte Baueinheit bildet. Zugleich ist zweckmäßigerweise vorgesehen, daß die aufragende Endabwinkelung des Tragteiles eine im Wesentlichen C-förmige Querschnittsform aufweist und in Verbindung mit einem Abschlußblech (Deckel) eine kastenförmige Abdeckung der Antriebseinrichtung bildet.

Der Antrieb der Einrichtung zum Anheben des Tragteiles gegenüber dem Chassis ist im einfachsten Falle durch ein mechanisches Hebelwerk gebildet, welches einen als Trittbügel ausgebildeten und am Chassis gelagerten, zweiarmigen Antriebshebel, einen diesen mit dem Tragteil verbindenden Schubhebel und eine als federbelastetes Pedal ausgebildete Arretiereinrichtung umfaßt.

In einer abgewandelten Auführungsform ist vorgesehen, daß in Verbindung mit einer Aufhängung des Tragteiles über Hebelparallelogramme an einem nach oben aufragenden Tragbock des Chassis die Einrichtung zum Anheben des Tragteiles durch eine aus einer mittels eines Pedales betätigbaren Hydraulikpumpe und einem Kolbenzylinder bestehende Baueinheit gebildet und als solche unterendig am Chassis abgestützt ist und an der oberen horizontalen Querwandung der nach oben aufragenden Endabwinkelung des Tragteiles angreift und daß das Chassis eine einen Freiraum für die Betätigung des Pedales der Hydraulikpumpe bildende Gestaltung aufweist.

In einer bevorzugten Verwirklichungsweise ist hinsichtlich der Ausgestaltung des Chassis der Transportkarre vorgesehen, daß das Chassis eine im wesentlichen T-förmige Grundrißform aufweist, wobei der Querbalken der T-Form als positives oder negatives Portal gestaltet und durch ein gebogenes oder gebautes Formteil gebildet ist.
Weiterhin kann dabei auch noch vorgesehen sein, daß der Hydraulikzylinder samt Hydraulikpumpe vermittels einer an den Seitenwandungen des Chassis befestigten Traverse am Chassis abgestützt ist, wobei die die Baueinheit aus Hydraulikzylinder und Hydraulikpumpe an den Seitenwandungen des Chassis abstützende Traverse mit der Baueinheit baueinheitlich ausgebildet ist und wobei zusätzlich zum Hydraulikzylinder eine insbesondere am Querbalken des Chassis abgestützte, an der oberen Querwandung der Endabwinkelung des Tragteiles angreifende Rückzugsfeder vorgesehen ist.

Eine weitere besonders tragfähige aber herstellungstechnisch einfache Ausgestaltung des Chassis ergibt sich aber auch dadurch, daß der Längsbalken der T-förmigen Grundrißform des Chassis durch einen in der Draufsicht U-förmigen Blechrahmen gebildet und an seinem dem Querbalken zugeordneten Ende eine den Tragbock bildende, nach oben gerichtete Abwinkelung aufweist, derart, daß er in der Seitenansicht etwa L-förmig gestaltet ist, und daß die nach oben gerichtete, den Tragbock bildende Abwinkelung des Längsbalkens des Chassis eine wenigstens annähernd der Höhe der Endabwinkelung des Tragteiles entsprechende Höhe aufweist.
Eine sehr feste und einfach herzustellende Verbindung von Längs- und Querbalken des T-förmigen Chassis ergibt sich dadurch, daß der Querbalken der T-förmigen Grundrißform des Chassis in entsprechend gestaltete Ausnehmungen der nach oben gerichteten Abwinkelung des Längsbalkens eingesetzt ist.

Zur weiteren Verbesserung der Stabilität und damit der Tragfähigkeit des Chassis kann weiter vorgesehen sein, daß der den Längsbalken bildende, in der Draufsicht U-förmige Blechrahmen im Bereich der Achse der vorderen Rollen des Chassis vermittels wenigstens einer Traverse ausgesteift und die die vorderen Rollen tragende Achse über an diese angeschlossene Laschen zusätzlich abgestützt ist.

Die im wesentlichen innerhalb des Tragbockes des Chassis untergebrachte Hubeinrichtung wird nach außen hin dadurch abgedeckt daß der durch die nach oben gerichtete Abwinkelung des Längsbalkens des Chassis gebildete Tragbock mittels eines Deckels zu einem wenigstens nach hinten geschlossenen, die Hubeinrichtung aufnehmenden Kasten ergänzt ist.

Ergänzend kann zu jeder der vorstehend aufgezeigten Ausgestaltungs-und Verwirklichungsmöglichkeiten vorgesehen werden, daß das Chassis eine im wesentlichen T-förmige Grundrißform aufweist, deren Querbalken als positives oder negatives Portal ausgebildet ist und dessen Längsbalken zwei zueinander parallele Längsträger umfaßt und das Tragteil eine vermittels eines mittleren Freiraumes in zwei zueinander parallele Tragflächenbereiche unterteilte Tragfläche sowie eine den Tragbock samt Hubeinrichtung haubenartig übergreifende, gegenüber der Tragfläche vertikal aufragende Endabwinkelung umfasst, wobei das Tragteil mit wenigstens einem zusätzlichen, aus einer Bereitschaftsstellung in eine zu dessen Tragflächen-bereichen höhengleich ausgerichtete Betriebslage verstellbaren Tragarmen ausgestattet ist.

In einer bevorzugten Ausgestaltung ist dabei vorgesehen, daß die zusätzlichen Tragarmen des Tragteiles um eine quer zur Längserstreckung der Tragflächenbereiche ausgerichtete Achse schwenkbar an der vertikal aufragenden Endabwinkelung des Tragteiles angelenkt sind, wobei die zusätzlichen Tragarme des Tragteiles wenigstens in ihrer Betriebslage einen seitlichen Abstand zu den Tragflächenbereichen aufweisen, derart, daß die zusätzlichen Tragarme des Tragteiles in ihrer Betriebslage in einem Winkel zu den Tragflächen gereichendes Tragteiles ausgerichtet sind.

Eine besondere Realisierungsform sieht dabei vor, daß die zusätzlichen Tragarme jeweils vermittels unter einem Winkel zur Längserstreckung der Tragflächenbereiche des Tragteiles angestellter Anlenkachsen schwenkbar an dem Tragteil, insbesondere dessen haubenartiger Endabwinkelung angelenkt sind, was in einfachster Weise dadurch erreicht wird, daß die zusätzlichen Tragarme jeweils aus einem hochkant stehend ausgerichteten Flachmaterialzuschnitt bestehen und jeweils vermittels in der Draufsicht trapezförmiger Lagerböcke an den Seitenwandungen der haubenartigen Endabwinkelung angelenkt sind, wobei die zusätzlichen Tragarme jeweils eine geringere Länge aufweisen als die Tragflächenbereiche des Tragteiles und in ihrer Betriebslage von der Endabwinkelung des Tragteiles ausgehend divergierend verlaufen.

In weiterer Ausgestaltung der Erfindung ist weiter vorgesehen, daß wenigstens einer der beiden zusätzlichen Tragarme einen eine Einschubbegrenzung bildenen Vorsprung oder Anschlag aufweist, welcher zweckmäßigerweise an der dem Tragteil zugewandten Innenfläche des oder der zusatzlichen Tragarme angeordnet ist.

Ferner sieht die Erfindung noch vor, daß das eine im wesentlichen T-förmige Grundrißform aufweisende Chassis sowie ein diesem gegenüber aufragend angeordneter Tragbock insgesamt aus Profilmaterialabschnitten bzw. profilierten Blechmaterialabschnitten gebildet sind, wobei der Querbalken der T-förmigen Grundrißform durch ein gebogenes oder gebautes Formteil gebildet ist und wobei der Längsbalken der T-förmigen Grundrißform durch zwei zueinander parallel ausgerichtete, gegenseitig beabstandete Profilträger gebildet ist.

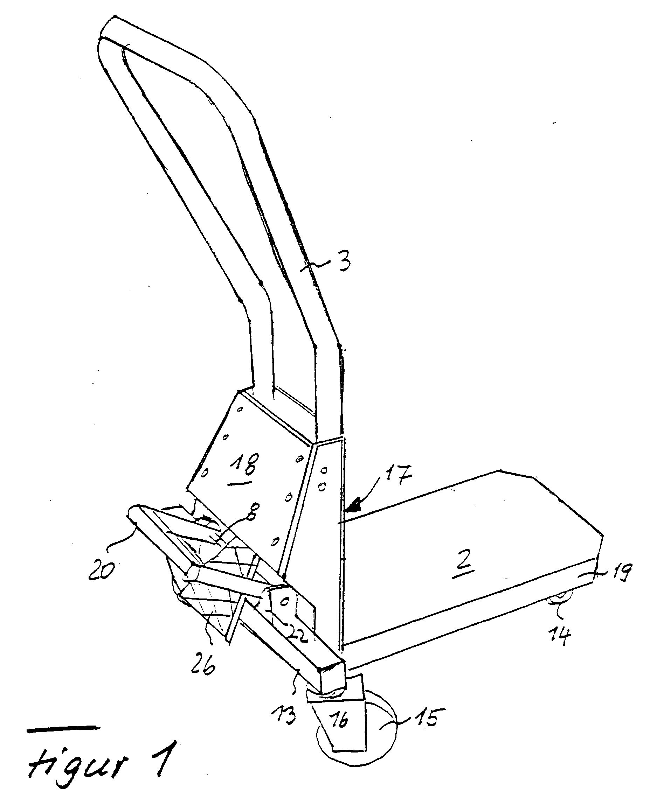

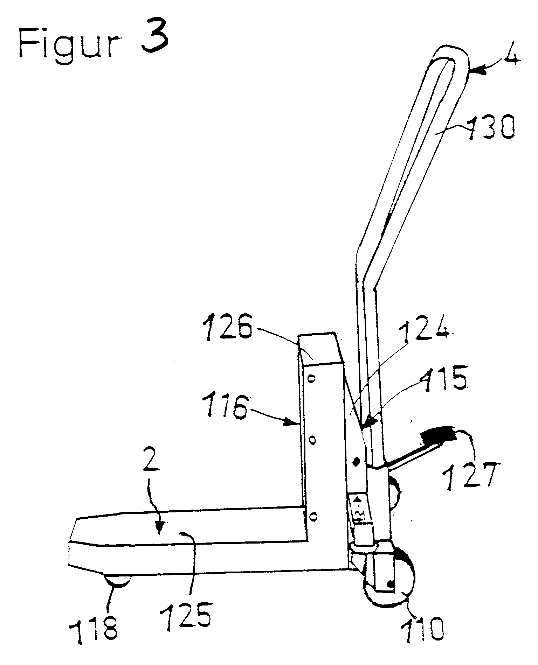

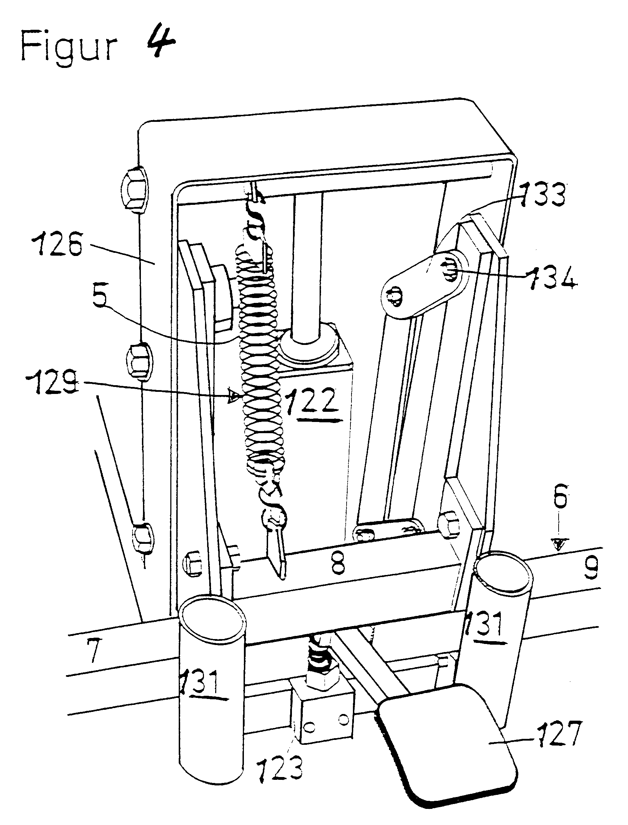

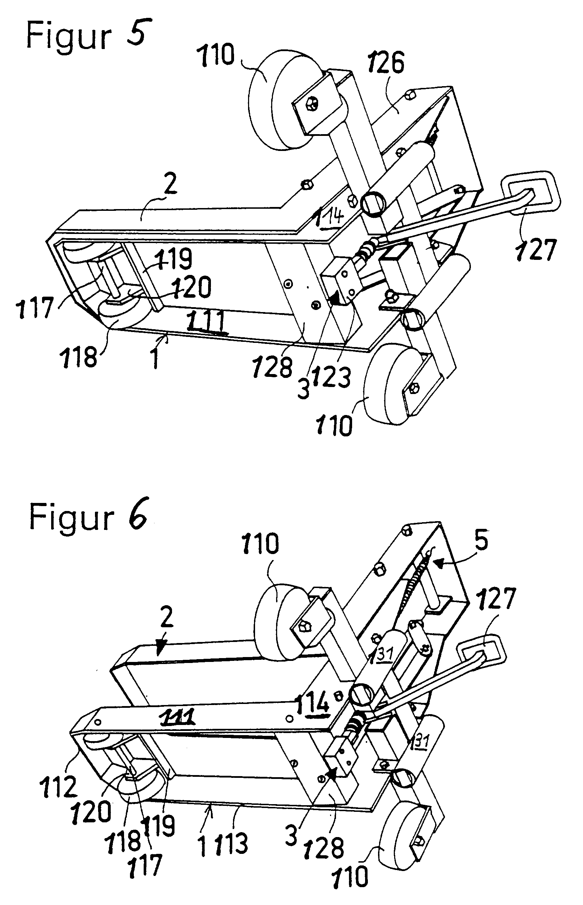

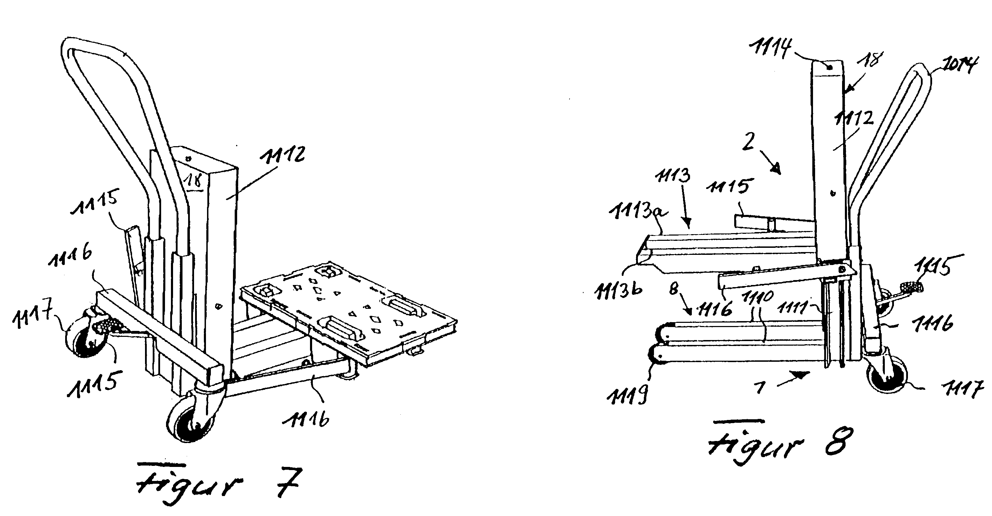

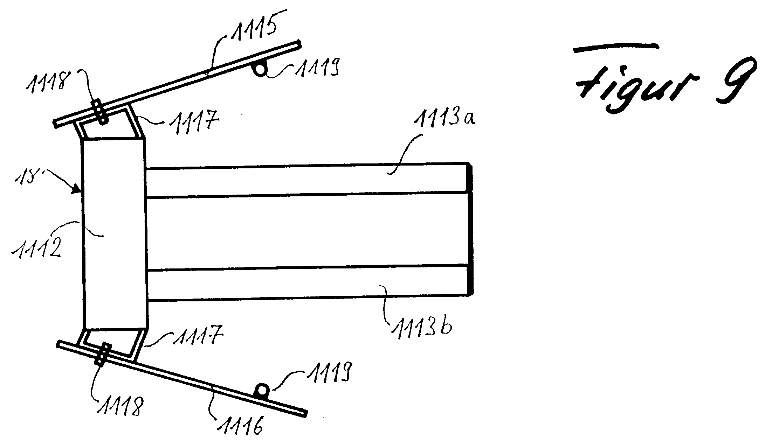

Die Erfindung ist in der nachfolgenden Beispielsbeschreibung anhand einiger in der Zeichnung dargestellten Ausführungsbeispiele im Einzelnen beschrieben.
In der Zeichnung zeigt die
- Figur 1: eine schaubildliche Darstellung einer ersten gestaltungsform einer Transportkarre;

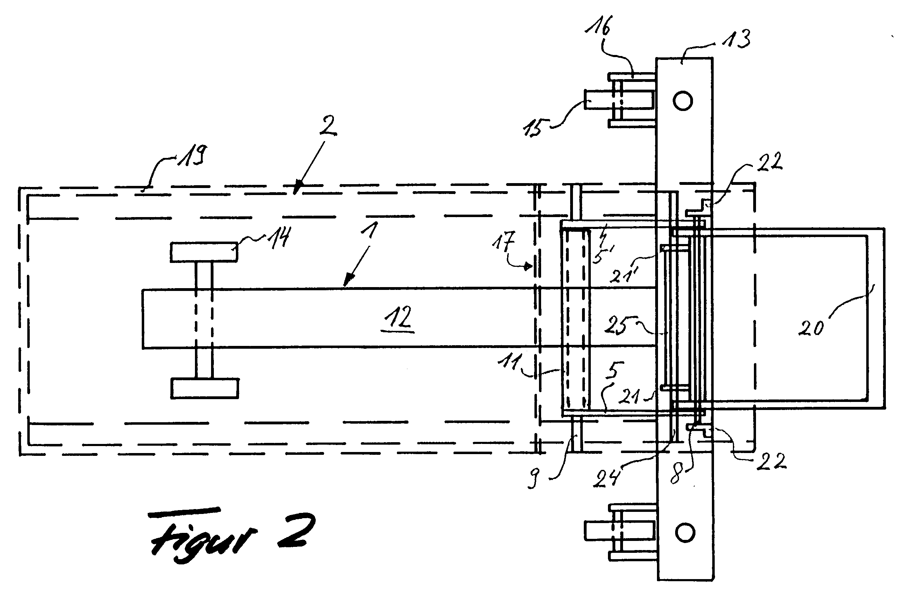

- Figur 2: eine Grundrißdarstellung der Transportkarre nach Figur 1;
- Figur 3: eine schaubildliche Darstellung einer anderen Gestaltungsform einer Transportkarre;
- Figur 4: eine schaubildliche Ansicht der Antriebseinrichtung für die Tragfläche der Transportkarrenach Fig. 3;
- Figur 5: eine schaubildliche Darstellung einer Transportkarre nach Fig. 3 in Transportstellung;
- Figur 6: eine schaubildliche Darstellung einer Transportkarre nach Fig. 3 in Hubstellung.
- Figur 7: eine schaubildliche Darstellung einer weiteren Gestaltungsform einer Transportkarre bei geschlossener Abdeckung der Hubeinrichtung;
- Figur 8: eine Rückansicht einer Transportkarrenach Fig. 7, gleichfalls bei geschlossener Abdeckung der Hubeinrichtung;
- Figur 9: eine Draufsicht auf eine Transportkarre nach Figur 7 und 8;
Im gezeigten Ausführungsbeispiel besteht die Transportkarre aus zwei untereinander verbundenen Haupt-Baugruppen, deren eine durch das Fahrwerk oder Chassis 1 und deren andere durch das Tragteil 2 samt Schiebebügel 3 gebildet ist, wobei die beiden Haupt-Baugruppen 1 und 2 untereinander mittels eines durch Schwenkhebelpaare 133 eines Schwenkhebelparallelogrammes miteinander verbunden sind. Die Schwenkhebelpaare 133 sind dabei um zueinander parallele Achsen 134 einerseits am Tragteil 2 und andererseits am Chassis 1 angelenkt. Das Chassis 1 besteht aus zwei in T-förmiger Anordnung ausgerichteten und miteinander verbundenen Hohlprofilträgern 12 und 13, deren einer 12 den Längs- und deren anderer 13 den Querbalken des T-förmigen Grundrisses des Chassis bildet. Am freien Ende des den Längsbalken des T-förmigen Chassis 1 bildenden Hohlträger 12 sind die vorderen Laufrollen 14 um eine Achse 7 rotierend gelagert. Die hinteren Laufrollen 15 sind vermittels schwenkbarer Laufrollenjoche 16 an den beiden Enden des den Querbalken der T-Form bildenden Hohlträgers 13 aufgehängt. Das Tragteil 2 weist an seinem hinteren Ende eine nach oben aufragende Endabwinkelung 17 mit im Wesentlichen C-förmiger Profilquerschnittsform auf, an deren Schmalseiten die Holme des Schiebebügels 3 befestigt sind und die vermittels eines Verschlußbleches 18 zu einem die An-triebseinrichtung für die Höhenverstellung des Tragteiles 2 aufnehmenden Kasten ergänzbar ist. Zu seiner Aussteifung weist das Tragteil 2 über seinen die Tragfläche bildenden Bereich hin nach unten abgestellte Randbereiche 19 auf, die entlang seiner Längsränder zu einem Trägerprofil verformt sind.
Bei dem in den Figuren 3 bis 6 gezeigten Ausführungsbeispiel besteht die Transportkarre aus drei untereinander verbundenen Haupt-Baugruppen, deren erste das Fahrwerk oder Chassis 1, deren zweite das Tragteil 2 und deren dritte die die Hubeinrichtung bildende Baueinheit 3 ist. Ergänzt werden diese Haupt-Baugruppen im gezeigten Ausführungsbeispiel noch durch einen Schiebebügel 4 und eine Rückzugsfeder 5. Das die erste Baugruppe bildende Chassis 1 weist eine im wesentlichen T-förmige Grundrißform auf, wobei im gezeigten Ausführungsbeispiel der Querbalken 6 der T-Form als positives Portal ausgebildet ist, in der Weise, daß der Querbalken 6 aus miteinander verbundenen Hohlträgerabschnitten 7, 8, 9 besteht, die zur Bildung eines Portales zueinander höhenversetzt angeordnet sind, derart, daß der Mittelbereich 8 des Querbalkens 6 einen größeren Abstand zum Boden hat, als dessen beide außenliegende und die hinteren Laufrollen 110 tragenden Seitenabschnitte 7 und 9. Der Längsbalken 111 der T-förmigen Grundrißform des Chassis 1 ist durch einen eine annähernd der Breite des Tragteiles 2 entsprechende Breite aufweisenden, in der Draufsicht U-förmigen Blechrahmen mit vertikal gerichteten Stirn- 112 und Seitenwandungen 113 gebildet und weist an seinem dem Querbalken 6 zugeordneten Ende eine einen Tragbock 114 bildende, nach oben gerichtete Abwinkelung 115 auf, derart, daß er in der Seitenansicht etwa L-förmig gestaltet ist, wobei die nach oben gerichtete, den Tragbock 114 bildende Abwinkelung des Längsbalkens 111 des Chassis 1 eine wenigstens annähernd der Höhe der Endabwinkelung 116 des Tragteiles 2 entsprechende Höhe besitzt. Insbesondere ist aus den Darstellungen der Figuren 5 und 6 ersichtlich, daß der Längsbalken 111 des Chassis 1 einen der Grundrißfläche des Tragteiles 2 entsprechenden Verlauf seiner Umfangskontur aufweist. Der den Längsbalken 111 bildende, in der Draufsicht U-förmige Blechrahmen ist im Bereich der Achse 117 der vorderen Laufrollen 118 vermittels einer Traverse 119, an welcher die die Laufrollen tragende Achse 117 über Laschen 120 zusätzlich abgestützt ist, ausgesteift. Der Querbalken 6 der T-förmigen Grundrißform des Chassis 1 ist in entsprechend gestalteten Ausnehmungen 121 der nach oben gerichteten Abwinkelung 115 des Längsbalkens 111 einliegend angeordnet. Die im wesentlichen innerhalb des Tragbockes 115 des Chassis 1 untergebrachte aus einem Hydraulikzylinder 122 und einer Hydraulikpumpe 123 bestehende Hubeinrichtung ist durch einen den Tragbock 115 übergreifenden Deckel 124 abgedeckt, wodurch der Tragbock 115 gleichzeitig zu einem wenigstens nach hinten geschlossenen, die Hubeinrichtung aufnehmenden Kasten ergänzt ist.
Das Tragteil 2 insgesamt durch ein einteiliges Blechpressteil mit im wesentlichen C-förmigen Profilquerschnitt gebildet und mit einer an seine horizontal ausgerichtete Tragfläche 125 anschließend ausgebildeten oben gerichteten und den Tragbock 115 des Chassis 1 haubenartig übergreifenden Endabwinkelung 126 versehen, wobei das Tragteil 2 das Chassis 1 auch im Bereich dessen Längsbalkens 111 haubenartig übergreift. Mit dem Tragbock 115 des Chassis 1 ist das Tragteil 2 vermittels zweier Parallelogrammhebelpaare 133 verbindbar, wobei die Parallelogrammhebel 133 wenigstens einenends vermittels Schraubenbolzen 134 lösbar entweder mit dem Tragteil 2 oder dem Tragbock 115 verbunden werden.
Die aus dem Hydraulikzylinder 122 und der Hydraulikpumpe 123 sowie einem Betätigungspedal 127 bestehende Baueinheit der Hubeinrichtung ist vermittels einer an den vertikal gerichteten Seitenwandungen des Chassis 1 befestigbaren Traverse 128 am Chassis 1 abgestützt ist, wobei die Traverse 128 mit der Baueinheit baueinheitlich ausgebildet bzw. verblockt ist.
Eine insbesondere am Querbalken 116 des Chassis 1 abgestützte, an der oberen Querwandung der Endabwinkelung des Tragteiles 2 angreifende Rückzugsfeder, ist im gezeigten Ausführungsbeispiel durch eine Schraubenfeder 129 gebildet. Zum Anschluß eines durch einen U-förmig gebogenen Hohlprofilabschnitt gebildeten Schiebebügels 130 sind an den Tragbock 115 des Chassis 1 zwei hülsenförmige Aufnahmen 131 für die Holmenden des Schiebebügels angeschlossen.
Bei dem in den Figuren 7 bis 9 gezeigten Ausführungsbeispiel besteht die Transportkarre aus drei untereinander verbundenen Haupt-Baugruppen, deren erste das Fahrwerk oder Chassis 1, deren zweite das Tragteil 2 und deren dritte, in der Zeichnung im Einzelnen nicht gezeigte Baugruppe, ein Schwenkhebelparallelogramm und eine die Hubeinrichtung bildende Baueinheit ist. Ergänzt werden diese Haupt-Baugruppen noch durch einen Schiebebügel 1114 und ein Betätigungspedal 1115 für die Hubeinrichtung.
Das die erste Baugruppe bildende Chassis 1 weist eine im wesentlichen T-förmige Grundrißform auf, wobei der Querbalken 1116 der T-Form als positives Portal ausgebildet ist, welches über zwei außenliegend angeordnete Laufrollen 1117 gegen den Boden abgestützt ist. Der Längsbalken 1118 der T-förmigen Grundrißform des Chassis 1 ist durch zwei zueinander parallele, vorderendig mit Laufrollen 1119 bestückte Längsträger 1110 gebildet und weist an seinem dem Querbalken 1116 zugeordneten Ende einen Tragbock 1111 auf, wobei die nach oben gerichtete, den Tragbock 1111 bildende Abwinkelung des Längsbalkens 1118 des Chassis 1 eine wenigstens annähernd der Höhe einer Endabwinkelung 1112 des Tragteiles 2 entsprechende Höhe besitzt. Das Tragteil 2 ist insgesamt durch ein ein-oder mehrteiliges Blechpressteil gebildet und mit einer an seine horizontal ausgerichtete Tragfläche 1113 anschließend ausgebildeten nach oben gerichteten und den Tragbock 1111 des Chassis 1 sowie die Hubeinrichtung haubenartig übergreifenden Endabwinkelung 1112, welche in der dargestellten Ansicht nach hinten durch einen Deckel 18 verschlossen ist, versehen, wobei das Tragteil 2 entsprechend der Ausbildung des Längsbalkens 1118 des Chassis 1 mittels einem längsgreichteten mittigen Freiraumes in zwei Tragflächenbereiche 1113a und 1113b unterteilt ist und die beiden Längsträger 1118 des Chassis 1 mit jedem der beiden, im Querschnitt etwa U-förmig ausgebildeten Tragflächenbereiche 1113a und 1113b haubenartig übergreift. Die den Tragbock 1111 des Chassis 1 haubenartig übergreifende Endabwinkelung 1112 des Tragteiles 2 ist als geschlossene Haube ausgebildet und mittels einer Schraubverbindung 1114 leicht lösbar mit der im Ausführungsbeispiel im Einzelnen nicht gezeigten Hubeinrichtung verbunden.
Bei der im Ausführungsbeispiel gezeigten Ausführungsform einer Transportkarre sind vermittels in der Draufsicht trapezförmiger Lagerböcke 1117 zusätzliche Tragarme 1115 und 1116 um schräg zur Längsrichtung der Tragflächenbereiche 1113a und 1113b ausgerichtete Schwenklagerachsen 1118 schwenkbar an der den Tragbock des Chassis 1 haubenartig übergreifenden Endabwinkelung 1112 des Tragteiles 2 angelenkt, derart, daß sie in ihrer abgesenkten und zu den Tragflächenbereichen 1113a und 1113b höhengleich ausgerichteten Betriebslage eine ausgehend von der Endabwinkelung 1112 des Tragteiles 2 zum freien Ende der Tragflächenbereiche 1113a und 1113b hin divergierende Stellung einnehmen. In ihrer abgesenkten Betriebsstellung sind die zusätzlichen Tragarme ferner über einen Anschlag 1119 formschlüssig gegen den jeweils zugehörigen Lagerbock 1117 abgestützt. Die zusätzlichen Tragarme 1115 und 1116, von denen auch nur einer vorgesehen sein kann, sind im gezeigten Ausführungsbeispiel durch hochkant gestellte Flachmaterialzuschnitte gebildet und bewirken eine zusätzlich kippsichere Abstützung von der eigentlichen Tragflächenbereiche 1113a und 1113b unterstützten Last bzw. Halb- oder Viertelpalette. Wie insbesondere aus den Figuren 6 und 9 ersichtlich weisen die zusätzlichen Tragarme 1115 und 1116 eine geringere Länge auf als die beiden Tragflächenbereiche 1113a und 1113b des Tragteiles 2 und sind zur Gewinnung einer Einschubbegrenzung für das Tragteil 2 der Transportkarre mit seitlichen Vorsprüngen oder Anschlägen 1120 versehen, welche mit einem Abstand zu deren vorderem Ende an den zusätzlichen Tragarmen 1115 und 1116 angeordnet sind und bewirken, daß das Tragteil 2 bzw. die Tragflächenbereiche 1113a und 1113b nur bis zu einem solchen Grad unter die aufzunehmende Palette eingeschoben werden können, daß das versehentliche Mitergreifen einer evtl. dahinterstehenden Palette ausgeschlossen ist, ganz gleichgültig, ob es sich dabei um eine Halb-oder eine in Querrichtung zu unterfahrende Viertelpalette handelt.

Bei der Aufnahme von Halbpaletten umgreifen die beiden Tragflächenbereiche 1113a und 1113b einen mittleren Tragbalken der Halbpalette mit geringem Seitenabstand und bilden die in einem größeren Seitenabstand an de unterseite der Fläche der Palette zur Anlage kommenden zusätzlichen Tragarme 1115 und 1116 jeweils die kippsichere Abstützung der Halbpalette gegenüber dem Tragteil 2 der Transportkarre.
Bei der Aufnahme von Viertelpaletten in Querrichtung, die infolge der Anordnung bzw. Ausbildung der Fußteile der Viertelpalette nur ein zu deren Gesamtfläche unsymertisches bzw. außermittiges Einschieben des Tragteiles 2 der Transportkarre erlaubt, übernimmt jeweils einer der in eine Betriebslage absenkbaren zusätzlichen Tragarme 1115 oder 1116 die kippsichere Abstützung der Viertelpalette gegnüber dem Tragteil 2, so daß im Falle der Aufnahme von Viertelpaletten jeweils nur einer der beiden zusätzlichen Tragarme in die Betriebslage abgesenkt zu werden braucht, um die kippsichere Abstützung einer Viertelpalette zu gewährleisten. Aus diesem Grunde sind auch die beiden zusätzlichen Tragarme 1115 und 1116 unabhängig voneinander in die Betriebslage absenkbar. In ihrer Bereitschafts- oder Mitführstellung befinden sich die beiden zusätzlichen Tragarme 1115 und 1116 in einer aufrechten, im wesentlichen parallel zur Endabwinkelung 1112 des Tragteiles 2 ausgerichteten Lage.

## Patentansprüche

1. Transportkarre für unterfahrbare Gegenstände, insbesondere Paletten und dergl., bestehend aus einem über wenigstens ein vorderes und zwei hintere Räder (14,15) gegen den Boden abgestützten, einen aufragenden Tragbock (115) umfassenden Chassis (1) und einem dieses übergreifenden sowie diesem gegenüber in paralleler horizontaler Ausrichtung anhebbaren Tragteil (2) und einer Einrichtung zum Anheben des Tragteiles (2) gegenüber dem Chassis (1) sowie einem aufragend angeordneten Schiebebügel (3), dadurch gekennzeichnet, daß das Chassis (1) eine aus wenigstens einem Längs- (12) und einem Querbalken (13) gebildete im Wesentlichen T-förmige Grundrißform besitzt, wobei der Querbalken (13) dem Längsbalken (12) gegenüber derart höhenversetzt angeordnet ist, daß er einen größeren Abstand zum Boden aufweist und daß das als das Chassis (1) übergreifende horizontal ausgerichtete Tragfläche ausgebildete Tragteil (2) an seine Tragfläche anschließend mit einer nach oben gerichteten, eine haubenartige Abdeckung des Tragbockes und der durch ein vermittels einer Antriebseinrichtung verschwenkbares Schwenkhebelparallelogramm (5,5') gebildeten Einrichtung zur Höhenverstellung des Tragteiles in paralleler horizontaler Ausrichtung gegenüber dem Chassis (1) bildenden und mittels eines Deckels (18) zu einem geschlossenen Kasten ergänzten Endabwinkelung (17) versehen ist.

2. Transportkarre nach Anspruch 1, dadurch gekennzeichnet, daß das Chassis (1) eine aus zwei miteinander verbundenen Hohlträgern (12,13) und an diesen gelagerten Laufrollen (14,15) sowie der Einrichtung zum Anheben des Tragteiles gegenüber dem Chassis (1) bestehende, eine erste im wesentlichen eine T-förmige Grundrißform aufweisende, vormontierte Baueinheit und ein an seine Tragfläche anschließend eine nach oben gerichtete, aufragende Endabwinkelung (17) aufweisendes Tragteil (2) eine zweite vorgefertigte bzw. vorfertigbare Einheit bilden, und daß beide Baueinheiten vermittels zweier Schwenkhebelpaare (113) miteinander verbunden sind.

3. Transportkarre nach Anspruch 1 und 2, dadurch gekennzeichnet, daß die Holme des Schiebebügels (3) an die nach oben gerichtete Endabwinkelung (17) des Tragteiles angeschlosssen sind, derart, daß Tragteil (2) und Schiebebügel (3) eine vormontierte Baueinheit bilden.

4. Transportkarre nach Anspruch 1 bis 3, dadurch gekennzeichnet, daß die aufragende Endabwinkelung (17) des Tragteiles (2) eine im Wesentlichen C-förmige Querschnittsform aufweist und in Verbindung mit einem Abschlußblech (Deckel 18) eine kastenförmige Abdeckung der Antriebseinrichtung bildet.

5. Transportkarre nach Anspruch 1 und 4, dadurch gekennzeichnet, daß der Antrieb der Einrichtung zum Anheben des Tragteiles gegenüber dem Chassis (1) durch ein mechanisches Hebelwerk gebildet ist, welches einen als Trittbügel (20) ausgebildeten und am Chassis (1) gelagerten, zweiarmigen Antriebshebel, einen diesen mit dem Tragteil verbindenden Schubhebel (21) (26) und eine als federbelastetes Pedal (26) ausgebildete Arretiereinrichtung umfaßt.

6. Transportkarre nach Anspruch 1, dadurch gekennzeichnet, daß in Verbindung mit einer Aufhängung des Tragteiles (2) über Hebelparallelogramme (113) an einem nach oben aufragenden Tragbock (114) des Chassis (1) die Einrichtung zum Anheben des Tragteiles (29 durch eine aus einer mittels eines Pedales (127) betätigbaren Hydraulikpumpe (123) und einem Kolbenzylinder (122) bestehende Baueinheit gebildet und als solche unterendig am Chassis (1) abgestützt ist und an der oberen horizontalen Querwandung der nach oben aufragenden Endabwinkelung (117) des Tragteiles (2) angreift und daß das Chassis (19 eine einen Freiraum für die Betätigung des Pedales (127) der Hydraulikpumpe bildende Gestaltung aufweist.

7. Transportkarre nach Anspruch 6, dadurch gekennzeichnet, daß das Chassis (1) eine im wesentlichen T-förmige Grundrißform aufweist, wobei der Querbalken der T-Form als positives oder negatives Portal gestaltet und durch ein gebogenes oder gebautes Formteil gebildet ist.

8. Transportkarre nach Anspruch 6 und 7, dadurch gekennzeichnet, daß der Hydraulikzylinder (122) samt Hydraulikpumpe (123) vermittels einer an den Seitenwandungen des Chassis (1) befestigten Traverse (128) am Chassis (1) abgestützt ist, wobei die die Baueinheit aus Hydraulikzylinder (122) und Hydraulikpumpe (123) an den Seitenwandungen des Chassis abstützende Traverse (128) mit der Baueinheit baueinheitlich ausgebildet ist.

9. Transportkarre nach Anspruch 6 bis 8, dadurch gekennzeichnet, daß zusätzlich zum Hydraulikzylinder (122) eine insbesondere am Querbalken des Chassis (1) abgestützte, an der oberen Querwandung der Endabwinkelung (117) des Tragteiles (2) angreifende Rückzugsfeder (129) vorgesehen ist.

10. Transportkarre nach Anspruch 6 bis 9, dadurch gekennzeichnet, daß der Längsbalken (111) der T-förmigen Grundrißform des Chassis (1) durch einen in der Draufsicht U-förmigen Blechrahmen gebildet und an seinem dem Querbalken zugeordneten Ende eine den Tragbock (114) bildende, nach oben gerichtete Abwinkelung (115) aufweist, derart, daß er in der Seitenansicht etwa L-förmig gestaltet ist, und daß die nach oben gerichtete, den Tragbock (114) bildende Abwinkelung (115) des Längsbalkens des Chassis eine wenigstens annähernd der Höhe der Endabwinkelung (116) des Tragteiles (2) entsprechende Höhe aufweist.

11. Transportkarre nach Anspruch 6 bis 10, dadurch gekennzeichnet, daß der Querbalken der T-förmigen Grundrißform des Chassis (1) in entsprechend gestaltete Ausnehmungen der nach oben gerichteten Abwinkelung des Längsbalkens eingesetzt ist.

12. Transportkarre nach Anspruch 6 bis 11, dadurch gekennzeichnet, daß der den Längsbalken (111) bildende, in der Draufsicht U-förmige Blechrahmen im Bereich der Achse (117) der vorderen Rollen (118) des Chassis (1) vermittels wenigstens einer Traverse (119) ausgesteift und die die vorderen Rollen (118) tragende Achse über an diese angeschlossene Laschen (120) zusätzlich abgestützt ist.

13. Transportkarre nach Anspruch 6 bis 12, dadurch gekennzeichnet, daß der durch die nach oben gerichtete Abwinkelung (115) des Längsbalkens (111) des Chassis (1) gebildete Tragbock (114) mittels eines Deckels (124) zu einem wenigstens nach hinten geschlossenen, die Hubeinrichtung aufnehmenden Kasten ergänzt ist.

14. Transportkarre nach einem der Ansprüche 1 bis 13, dadurch gekennzeichnet, daß das Chassis (1) eine im wesentlichen T-förmige Grundrißform aufweist, deren Querbalken (1116) als positives oder negatives Portal ausgebildet ist und dessen Längsbalken zwei zueinander parallele Längsträger (1110) umfaßt und daß das Tragteil (2) über einen längsgerichteten mittigen Freiraum eine in zwei zueinander parallele Tragflächenbereiche(1113a und 1113b) unterteilte Tragfläche sowie eine den Tragbock samt Hubeinrichtung haubenartig übergreifende, gegenüber der Tragfläche vertikal aufragende Endabwinkelung (1112) umfasst und daß das Tragteil (2) mit zusätzlichen, aus einer Bereitschaftsstellung in eine zu dessen Tragflächenbereichen höhengleich ausgerichtete Betriebslage verstellbaren Tragarmen (1115, 1116) ausgestattet ist.

15. Transportkarre nach Anspruch 1 und 14, dadurch gekennzeichnet, daß die zusätzlichen Tragarme (1115, 1116) des Tragteiles (2) um eine quer zur Längserstreckung der Tragflächenbereiche (1113a und 1113b) ausgerichtete Achse schwenkbar an der vertikal aufragenden Endabwinkelung (1112) des Tragteiles (2) angelenkt sind, wobei die zusätzlichen Tragarme des Tragteiles wenigstens in ihrer Betriebslage einen seitlichen Abstand zu den Tragflächenbereichen aufweisen, derart daß die zusätzlichen Tragarme des Tragteiles in ihrer Betriebslage in einem Winkel zu den Tragflächenbereichen des Tragteiles ausgerichtet sind.

16. Transportkarre nach einem der Ansprüche 1 bis 15, dadurch gekennzeichnet, daß die zusätzlichen Tragarme (1115, 1116) jeweils vermittels unter einem Winkel zur Längserstreckung der Tragflächenbereiche (1113a und 1113b) des Tragteiles (2) angestellter Anlenkachsen (1118) schwenkbar an dem Tragteil, insbesondere dessen haubenartiger Endabwinkelung (1112) angelenkt sind.

17. Transportkarre nach einem der Ansprüche 1 bis 16, dadurch gekennzeichnet, daß die zusätzlichen Tragarme (1115, 1116) jeweils aus einem hochkant stehend ausgerichteten Flachmaterialzuschnitt bestehen und jeweils vermittels in der Draufsicht trapezförmiger Lagerböcke (1117) an den Seitenwandungen der haubenartigen Endabwinkelung (1112) angelenkt sind, wobei die zusätzlichen Tragarme jeweils eine geringere Länge aufweisen als die Tragflächenbereiche (1113a und 1113b) des Tragteiles (2) und in ihrer Betriebslage von der Endabwinkelung (1112) des Tragteiles ausgehend divergierend verlaufen.

18. Transportkarre nach einem der Ansprüche 1 bis 17, dadurch gekennzeichnet, daß wenigstens einer der beiden zusätzlichen Tragarme (1115, 1116) einen eine Einschubbegrenzung bildenen Vorsprung oder Anschlag (1120) aufweisen, wobei der die Einschubbegrenzung bildende Anschlag bzw. Vorsprung an der dem Tragteil (2) zugewandten Innenfläche des oder der zusätzlichen Tragarme (1115, 1116) angeordnet ist.

19. Transportkarre nach einem der Ansprüche 1 bis 18, dadurch gekennzeichnet, daß das eine im wesentlichen T-förmige Grundrißform aufweisende Chassis (1) sowie ein diesem gegenüber aufragend angeordneter Tragbock insgesamt aus Profilmaterialabschnitten bzw. profilierten Blechmaterialabschnitten gebildet sind, wobei der Querbalken der T-förmigen Grundrißform durch ein gebogenes oder gebautes Formteil gebildet ist und wobei der Längsbalken der T-förmigen Grundrißform durch zwei zueinander parallel ausgerichtete, gegenseitig beabstandete Profilträger gebildet ist.

## Claims

1. Transport car for liftable objects, in particular palettes and the like, comprising a chassis (1), supported on the ground by at least one front and two rear wheels (14, 15) and having an upright bearer (115), a bearing platform (2) overlapping the chassis which can be lifted relative thereto in parallel horizontal direction, a mechanism for lifting the bearing platform (2) from the chassis (1) and an upright push bar (3), characterised in that the chassis (1) is essentially T-shaped and is formed from at least one longitudinal (12) and one cross bar (13), whereby the cross bar (13) is arranged relative to the longitudinal bar (12) offset in height in such a way that it has a greater distance from the ground, and the bearing platform (2), designed as a horizontal bearing surface overlapping the chassis (1), is provided with an upright end section (17), which joins the bearing surface and forms a hood-like cover for the bearer and the mechanism, formed by a pivot lever parallelogram (5, 5') pivoted by a driving mechanism, for adjusting the height of the bearing platform in parallel horizontal direction relative to the chassis, and is completed by means of a lid (18) to form a closed box.

2. Transport car according to claim 1, characterised in that the chassis (1), a preassembled component comprising two connected hollow beams (12, 13) and rollers (14, 15) mounted thereon and the mechanism for lifting the bearing platform from the chassis (1), said component having a first essentially T-shaped design, and a bearing platform (2) having an upright end section (17) connected to the bearing surface form a second preconstructed or preconstructable unit and both components are connected by two pivot lever pairs (113).

3. Transport car according to Claim 1 and 2, characterised in that the side bars of the push frame (3) are connected to the upright end section (17) of the bearing platform in such a way that the bearing platform (2) and push frame (3) form a preassembled unit.

4. Transport car according to Claims 1 to 3, characterised in that the upright end section (17) of the bearing platform (2) has an essentially C-shaped cross section and together with an end plate (lid 18) forms a box-shaped cover for the driving mechanism.

5. Transport car according to Claim 1 and 4, characterised in that the drive of the mechanism for lifting the bearing platform from the chassis (1) is a mechanical lever apparatus, which comprises a two-armed driving lever that is designed as a foot bar (20) and mounted on the chassis (1), a push lever (21) (26) connecting the driving lever to the bearing platform and a locking device designed as a spring-loaded pedal (26).

6. Transport car according to Claim 1, characterised in that in connection with a suspension of the bearing platform (2) and via lever parallelograms (113) on an upright bearer (114) of the chassis (1) the mechanism for lifting the bearing platform (2) is formed by a component comprising a hydraulic pump (123) activated by a pedal (127) and a piston cylinder (122), is supported as such at the bottom end of the chassis (1) and acts on the upper horizontal cross wall of the upright end section (117) of the bearing platform (2) and the chassis (1) is designed to have a free space for activating the pedal (127) of the hydraulic pump.

7. Transport car according to Claim 6, characterised in that the chassis (1) has an essentially T-shaped design, whereby the cross bar of the T is designed as a positive or negative portal and is a curved or shaped formed part.

8. Transport car according to Claim 6 and 7, characterised in that the hydraulic cylinder (122) with the hydraulic pump (123) is supported on the chassis (1) by means of a cross bar (128) secured to the side walls of the chassis (1), whereby the cross bar (128) supporting the component comprising the hydraulic cylinder (122) and hydraulic pump (123) on the side walls of the chassis is designed to be a single unit with the component.

9. Transport car according to Claims 6 to 8, characterised in that in addition to the hydraulic cylinder (122) a restoring spring (129) is provided that acts on the upper cross wall of the end section (117) of the bearing platform (2) and is supported in particular on the cross bar of the chassis (1).

10. Transport car according to Claims 6 to 9, characterised in that the longitudinal bar (111) of the T-shaped design of the chassis (1) is formed by a plate frame that is U-shaped in plan view, and at the end assigned to the cross bar has an upright section (115) forming the bearer (114), so that it is L-shaped in side view, and the upright section (115) of the longitudinal bar of the chassis forming the bearer (114) is at least almost as high as the end section (116) of the bearing platform (2).

11. Transport car according to Claims 6 to 10, characterised in that the cross bar of the T-shaped design of the chassis (1) is inserted into corresponding recesses of the upright section of the longitudinal bar.

12. Transport car according to Claims 6 to 11, characterised in that the plate frame, that forms the longitudinal bar (111) and is U-shaped in plan view, in the region of the axle (117) of the front rollers (118) of the chassis, is reinforced by at least one cross bar (119) and the axle bearing the front rollers (118) is additionally supported by brackets (120) attached thereto.

13. Transport car according to Claims 6 to 12, characterised in that the bearer (114), formed by the upright section (115) of the longitudinal bar (111) of the chassis (1), is completed by having a lid (124) to form a box that is closed at least to the rear and accommodates the lifting mechanism.

14. Transport car according to one of Claims 1 to 13, characterised in that the chassis (1) has an essentially T-shaped design, the cross bar (1116) of which is designed as a positive or negative portal and the longitudinal bar of which has two parallel longitudinal supports (1110), and the bearing platform (2) over a longitudinal central free space comprises a bearing surface divided into two parallel bearing surfaces (1113a and 1113b) and an end section (1112) that overlaps the bearer and lifting mechanism like a hood and is vertical relative to the bearing platform and the bearing platform (2) is equipped with additional bearing arms (1115, 1116) which can be adjusted from a stand-by position to an operating position which is the same height as its bearing surfaces.

15. Transport car according to Claim 1 and 14, characterised in that the additional bearing arms (1115, 1116) of the bearing platform (2) are hinged about an axis perpendicular to the longitudinal extension of the bearing surfaces (1113a and 1113b) to pivot with the vertical end section (1112) of the bearing platform (2), whereby the additional bearing arms of the bearing platform have a lateral distance to the bearing surfaces at least in their operating position, such that the additional bearing arms of the bearing platform are aligned in their operating position at an angle to the bearing surfaces of the bearing platform.

16. Transport car according to one of Claims 1 to 15, characterised in that the additional bearing arms (1115, 1116) are hinged respectively, by means of hinge axes (1118) positioned at an angle to the longitudinal extension of the bearing surfaces (1113a and 1113b) of the bearing platform (2), pivoting on the bearing platform, in particular its hood-like end section (1112).

17. Transport car according to one of Claims 1 to 16, characterised in that the additional bearing arms (1115, 1116) respectively are made of an edgeways aligned flat material blank, and are hinged by means of bearing blocks (1117), that are trapezoid in plan view, to the side walls of the hood-like end section (1112), whereby the additional bearing arms are shorter respectively than the bearing surfaces (1113a and 1113b) of the bearing platform (2) and in operating position diverge out from the end section (1112) of the bearing platform.

18. Transport car according to one of Claims 1 to 17, characterised in that at least one of the two additional bearing arms (1115, 1116) has a projection or stop (1120) forming a slide-in stop, whereby the stop or projection forming the slide-in stop is arranged on the inner face of the bearing arm or additional bearing arms (1115, 1116) facing the bearing platform (2).

19. Transport car according to one of Claims 1 to 18, characterised in that the chassis (1) having an essentially T-shaped design and a bearer arranged upright relative thereto are both made of profiled material sections or profiled sheet metal sections, whereby the cross bar of the T-shaped design is formed by a curved or shaped formed part, and whereby the longitudinal bar of the T-shaped design is formed by two spaced apart profiled supports that are parallel to one another.

## Revendications

1. Chariot de transport pouvant être glissé sous des objets à transporter, en particulier pour palettes ou objets similaires, qui se compose d'un châssis (1) s'appuyant sur le sol par au moins une roue avant et deux roues arrière (14), (15) et comprenant un chevalet (115) dressé debout, d'une partie porteuse (2) recouvrant le châssis et pouvant être soulevée en position horizontale et parallèle audit châssis, d'un dispositif de levage de la partie porteuse (2) permettant de la soulever par rapport au châssis (1) et, d'un étrier (3) pour pousser se redressant, *caractérisé en ce que* le châssis (1) présente une projection horizontale sensiblement en forme de T formé au moins d'un longeron (12) et d'une barre transversale (13) décalée en hauteur par rapport audit longeron (12) de façon à se trouver à une plus grande distance du sol et *en ce que* la partie porteuse (2) formant la surface porteuse horizontale recouvrant le châssis (1) comporte une extrémité (17) repliée vers le haut, formant ensemble avec un couvercle (18) un caisson fermé recouvrant à la manière d'un capot le chevalet et le dispositif qui permet le réglage en hauteur de la partie porteuse (2) dans une position horizontale et parallèle au châssis (1) et qui est constitué d'un parallélogramme de leviers articulés (5), (5') pivotant grâce à un dispositif de commande.

2. Chariot de transport selon la revendication 1 *caractérisé en ce que* le châssis (1) qui présente une projection horizontale sensiblement en forme de T et est constitué de deux supports creux (12), (13) assemblées sur lesquels sont montés des roues (14), (15) et du dispositif permettant le réglage en hauteur de la partie porteuse (2) par rapport audit châssis (1), forme un premier module de construction assemblé préalablement et *en ce que* la partie porteuse (2) pourvue d'une extrémité (17) prolongeant la surface porteuse et repliée vers le haut en se redressant, forme un second module de construction assemblé ou pouvant être assemblé préalablement, les deux modules de construction étant reliés par deux paires de leviers pivotants (113).

3. Chariot de transport selon les revendications 1 et 2 *caractérisé en ce que* les montants de l'étrier (3) pour pousser prolongent l'extrémité (17) repliée vers le haut de la partie porteuse (2) de sorte que ladite partie porteuse et l'étrier (3) forment un module de construction assemblé préalablement.

4. Chariot de transport selon les revendications 1 à 3 *caractérisé en ce que* l'extrémité (17) repliée vers le haut de la partie porteuse (2) présente une section transversale sensiblement en forme de C et constitue ensemble avec une tôle de fermeture (couvercle 18) un caisson recouvrant le dispositif de commande.

5. Chariot de transport selon les revendications 1 à 4 *caractérisé en ce que* le dispositif de commande pour soulever la partie porteuse (2) par rapport au châssis (1) est constitué d'un mécanisme de leviers mécanique qui comprend un levier de commande à deux bras sous forme d'un étrier à pédale (20) articulé sur le châssis (1), d'un lever poussoir (21) reliant le lever de commande à la partie porteuse et, d'un dispositif d'arrêt constitué d'une pédale (26) à ressort.

6. Chariot de transport selon la revendication 1 *caractérisé en ce que* conjointement à une suspension de la partie porteuse (2) par un parallélogramme de leviers articulés (113) sur un chevalet (114) du châssis (1) se redressant vers le haut, le dispositif permettant le réglage en hauteur de la partie porteuse (2) est constitué d'un module de construction se composant d'une pompe hydraulique (123) actionnée par une pédale (127) et d'un cylindre à piston (122) s'appuyant à son extrémité inférieure sur le châssis (1) et relié à la paroi perpendiculaire horizontale supérieure de l'extrémité (117) repliée vers le haut de la partie porteuse (2) et *en ce que* le châssis (1) présente une conformation comprenant un espace libre en vue d'actionner la pédale (127) de la pompe hydraulique.

7. Chariot de transport selon la revendication 6 *caractérisé en ce que* le châssis (1) présente une projection horizontale sensiblement en forme de T dont la barre transversale forme un portique positif ou négatif et est constituée d'une pièce moulée recourbée ou assemblée.

8. Chariot de transport selon les revendications 6 et 7 *caractérisé en ce que* le cylindre hydraulique (122) s'appuie ensemble avec la pompe hydraulique (123) sur le châssis (1) par l'intermédiaire d'une traverse (128) qui est fixée sur les parois latérales du châssis (1) et qui constitue une unité de construction avec le module de construction composée du cylindre hydraulique (122) et de la pompe hydraulique (123).

9. Chariot de transport selon les revendications 6 à 8 *caractérisé par* un ressort de rappel (129), prévu en complément au cylindre hydraulique (122), s'appuyant plus particulièrement sur la barre transversale du châssis (1) et sur la paroi transversale supérieure de l'extrémité (17) repliée de la partie porteuse (2).

10. Chariot de transport selon les revendications 6 à 9 *caractérisé en ce que* le longeron (111) du châssis (1) de projection horizontale en forme de T est constitué d'un cadre en tôle présentant vu de dessus une forme en U et comporte à son extrémité associée à la barre transversale une partie (115) repliée vers le haut et formant le chevalet (114) de sorte que ledit longeron présente vu de côté une forme sensiblement en L et que son extrémité (115) repliée vers le haut formant le chevalet (114) présente une hauteur correspondant au moins approximativement à la hauteur de l'extrémité repliée (116) de la partie porteuse (2).

11. Chariot de transport selon les revendications 6 à 10 *caractérisé en ce que* la barre transversale du châssis (1) de projection horizontale en forme de T est engagée dans des évidements de forme correspondante de la partie repliée vers le haut du longeron.

12. Chariot de transport selon les revendications 6 à 11 *caractérisé en ce que* le cadre en tôle qui présente vu de dessus une forme de U et constitue le longeron (111) est pourvu, dans la zone de l'axe des roues avant (118) du châssis, d'un raidisseur sous forme d'une traverse (119) et *en ce que* l'arbre portant les roues avant (118) est assuré d'un appui supplémentaire dû à des pattes (120) qui lui sont associées.

13. Chariot de transport selon les revendications 6 à 12 *caractérisé en ce que* le chevalet (114) constitué de l'extrémité (115) repliée vers le haut du longeron (111) du châssis (1) est complété par un couvercle (124) pour former un caisson fermé au moins vers l'arrière, dans lequel est logé de dispositif de levage.

14. Chariot de transport selon l'une des revendications 1 à 13 *caractérisé en ce que* le châssis (1) présente une projection horizontale sensiblement en forme de T dont la barre transversale (1116) a une forme de portique positif ou négatif et dont le longeron comprend deux parties (1110) parallèles l'une à l'autre et *en ce que* la partie porteuse comporte, d'une part, une surface porteuse divisée en deux parties (1113a), (1113b) parallèles l'une à l'autre, entre lesquelles est prévu un espace libre longitudinal et, d'autre part, une partie extrême (1112) repliée orientée verticalement vers le haut, recouvrant le chevalet et le dispositif de levage à la manière d'un capot et *en ce que* la partie porteuse est pourvue en outre de bras de support (1115), (1116) déplaçables d'une position de repos en une position de service se trouvant à la même hauteur que les surfaces porteuses.

15. Chariot de transport selon les revendications 1 à 14 *caractérisé en ce que* les bras de support supplémentaires (1115), (1116) de la partie porteuse (2) sont articulés sur l'extrémité repliée (1112) orientée verticalement vers le haut de la partie porteuse, autour d'un axe perpendiculaire à l'étendue horizontale des surfaces (1113a), (1113b) de la partie porteuse (2) et sont disposés, au moins en position de service, à une distance latérale desdites surfaces de la partie porteuse de façon à déterminer en positon de service un angle avec lesdites surfaces de la partie porteuse.

16. Chariot de transport selon les revendications 1 à 15 *caractérisé en ce que* les bras de support supplémentaires (1115), (1116) sont articulés sur la partie porteuse et en particulier sur son extrémité repliée (1112) formant capot, par l'intermédiaire d'axes d'articulation (1118) déterminant un angle avec l'étendue longitudinale des parties (1113a), (1113b) de la surface porteuse.

17. Chariot de transport selon les revendications 1 à 16 *caractérisé en ce que* les bras de support supplémentaires (1115), (1116) sont constitués chacun d'un segment de plat mis debout, sont articulés sur les parois latérales de l'extrémité repliée (1112) formant capot par l'intermédiaire de consoles (1117) présentant vues de dessus une forme de trapèze, sont moins longs que les parties (1113a), (1113b) de la surface porteuse (2) et sont, en position de service, orientés de manière à diverger à partir de l'extrémité repliée (1112) de la partie porteuse (2).

18. Chariot de transport selon l'une des revendications 1 à 17 *caractérisé en ce que* au moins l'un des deux bras supplémentaires (1115), (1116) comporte une saillie ou butée qui limite l'engagement de la partie porteuse et qui est prévue sur la face intérieure du ou des bras de supports supplémentaires (1115), (1116), orientée vers la partie porteuse (2).

19. Chariot de transport selon l'une des revendications 1 à 18 *caractérisé en ce que* le châssis (1) de projection horizontale en forme de T et le chevalet se redressant par rapport au châssis sont constitués de découpes de profilé, respectivement de découpes de tôle profilée, la barre transversale du T du châssis étant constituée d'une pièce moule recourbée ou assemblée et le longeron du T du châssis de deux poutrelles de profilé paralléles, disposées à une certaine distance l'une de l'autre.
